# EUROPEAN PATENT SPECIFICATION

(11) **EP 3 252 017 B1**
(45) Date of publication and mention of the grant of the patent: **04.03.2020**
(21) Application number: 16743347.3
(22) Date of filing: 26.01.2016
(51) Int. Cl.: C01G 49/00, C08K 3/22, C08K 9/04, C08L 101/00, H01F 1/36, H01F 1/37

(54) **MAGNETIC FILLER**
MAGNETISCHER FÜLLSTOFF
CHARGE MAGNÉTIQUE

(30) Priority: 28.01.2015 JP 2015013795
(43) Date of publication of application: 06.12.2017
(73) Proprietor: Powdertech Co., Ltd., Kashiwa-shi, Chiba 277-8557 (JP)
(72) Inventor: AGA, Koji, Kashiwa-shi Chiba 277-8557 (JP); SUGIURA, Takao, Kashiwa-shi Chiba 2778557 (JP)
(74) Representative: Vossius & Partner Patentanwälte Rechtsanwälte mbB
(86) International application number: PCT/JP2016/052152
(87) International publication number: WO 2016/121744

(56) References cited:
- EP-A1- 1 179 507
- EP-A1- 2 615 499
- JP-A- 2000 355 663
- JP-A- 2006 173 266
- JP-A- 2006 173 266
- JP-A- 2014 182 304

## Description

### [Technical Field]

The present invention relates to a magnetic filler, and more particularly to a magnetic filler composed of the ferrite particles having an outer shell structure containing a Ti oxide, and a resin molded product made using the magnetic filler.

### [Background Art]

The ferrite particles are used in various applications. For example, Patent Document 1 (Japanese Patent Laid-Open No. 5-299870) discloses a radio wave absorbing material for forming of a magnetic material layer laminated on a metal plate. The magnetic material layer contains 90 wt% or more of spinel ferrite particles having a diameter of 0.5 µm to 5 mm in a resin, with a thickness of 10 to 30 µm. The disclosed examples of the ferrite particles include (Mn, Zn) ferrite particles.

Patent Document 1 discloses that the ferrite particles are mixed with a resin for use as magnetic filler. However, Patent Document 1 does not focus on the properties of the ferrite particles, i.e. the ferrite particles may not achieve a low apparent density, various properties in a controllable state, and filling of a specified volume with a low weight. The radio wave absorbing material disclosed in Patent Document 1 has insufficient radio wave shielding performance.

Patent Document 2 (Japanese Patent Laid-Open No. 2007-320847) discloses a material containing a plurality of a core fine particle structure containing a plurality of primary fine particles and a plurality of primary pores, and a plurality of core-shell ceramic fine particles containing a shell surrounding at least a part of the core fine particle structure. The products may be a membrane, a sensor, an electrode, and a getter.

The core-shell ceramic fine particles disclosed in Patent Document 2 include yttrium stabilized zirconia as a core and lanthanum ferrite as a shell. As lanthanum ferrite is used as the shell, the ferrite particles may not achieve a low apparent density, various properties in a controllable state, and filling of a specified volume with a low weight.

JP 2006 173266 A and EP 1 179 507 A1 disclose titania-coated ferrite particles and corresponding molded bodies.

### [Documents Cited]

### [Patent Document]

Patent Document 1: Japanese Patent Laid-Open No. 5-299870
Patent Document 2: Japanese Patent Laid-Open No. 2007-320847
Patent Document 3: JP 2006 173266 A
Patent Document 4: EP 1 179 507 A1

### [Summary of Invention]

### [Problems to be Solved]

So, an object according to the present invention is to provide a magnetic filler made from the ferrite particles having a low apparent density, capable of maintaining various properties in a controllable state and filling a specified volume with a low weight, and a resin molded product manufactured using the magnetic filler.

### [Means to Solve the Problem]

Through extensive investigation to solve the problems described above, the present inventors thought out that the object can be achieved by using the ferrite particles having an outer shell structure containing a Ti oxide as the magnetic filler, sand the present invention was accomplished. The present invention was finished based on the knowledge.

The present invention provides a magnetic filler characterized in composed of the ferrite particles having an outer shell structure containing a Ti oxide

The ferrite particles constituting the magnetic filler according to the present invention is preferable that the thickness of the outer shell structure is 0.5 to 10 µm.

The ferrite particles constituting the magnetic filler according to the present invention is preferable that density of the internal part is smaller than the density of the outer shell structure.

The ferrite particles constituting the magnetic filler according to the present invention is preferable that the volume average particle diameter is 10 to 100 µm.

The magnetic filler according to the present invention is preferable to be coat and/or impregnated with a resin.

The present invention provides a resin molded product formed from the magnetic filler.

### [Advantages of the Invention]

The ferrite particles according to the present invention has a low apparent density and filling a specified volume with a low weight, with various properties maintained in a controllable state because the ferrite particles have an outer shell structure containing Ti. As a result, if the ferrite particles are used as a magnetic filler, a resin molded product having a low specific gravity can be obtained, and are used in applications such as a radio wave absorbing material.

### [Brief Description of Drawings]

[Figure 1] Figure 1 is an electron micrograph (×200) of the cross section of the ferrite particle according to the present invention, and shows the method of determining the thickness of the outer shell structure.

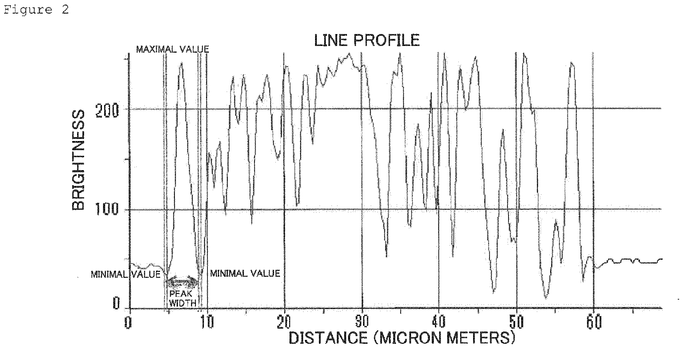

[Figure 2] Figure 2 is an analyzed graph of the image shown in Figure 1.
[Figure 3] Figure 3 is the electron micrograph in Figure 1, showing the method of determining the proportion of the portion having the outer shell structure in the length of circumference.

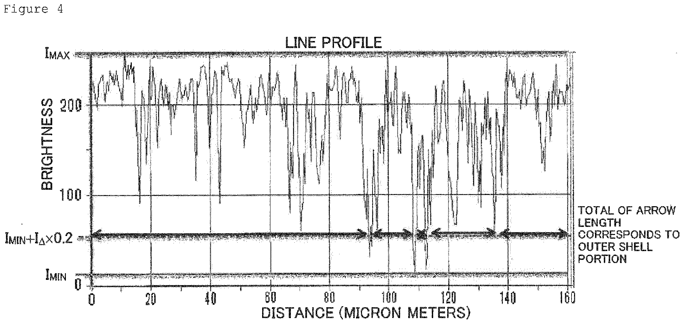

[Figure 4] Figure 4 is an analyzed graph of the image shown in Figure 3.

### [Preferred Embodiment of the Invention]

The embodiment according to the present invention will be described.

### <Ferrite particles according to the present invention>

The ferrite particles according to the present invention have an outer shell structure (core-shell form) containing titanium. So, the ferrite particles have a low apparent density, and various properties are maintained in a controllable state. Further, the ferrite particles according to the present invention fill a specified volume with a low weight of the ferrite particles. The term "ferrite particles" in the present invention refer to a mass of individual ferrite particles unless otherwise noted, and the simple term "particle" refer to individual ferrite particles.

The outer shell structure should be formed to be visually recognized in the cross-sectional SEM image of a ferrite particle if embedded in a resin and observed with an SEM. More specifically, the outer shell structure should have the outer periphery with a thickness in a certain range accounting for 80% or more of the circumferential length. More preferably, the proportion of the outer periphery in the circumferential length is 90% or more.

The thickness of the outer shell structure is preferable to be 0.5 to 10 µm to achieve the intended object. If the thickness of the outer shell structure is less than 0.5 µm, mechanical strength of the ferrite particles is weak, and the various inherent powder properties may not be exhibited due to fracture. In particular, fractures generated in use as a carrier may cause scratches on a photo conductor drum. If the thickness of the outer shell structure exceeds 10 µm, no desired effect can be exhibited because the ferrite particles having the outer shell structure have no difference from conventional ferrite particles. The thickness of the outer shell structure is more preferable to be 0.5 to 8 µm, most preferable to be 0.5 to 6.5 µm.

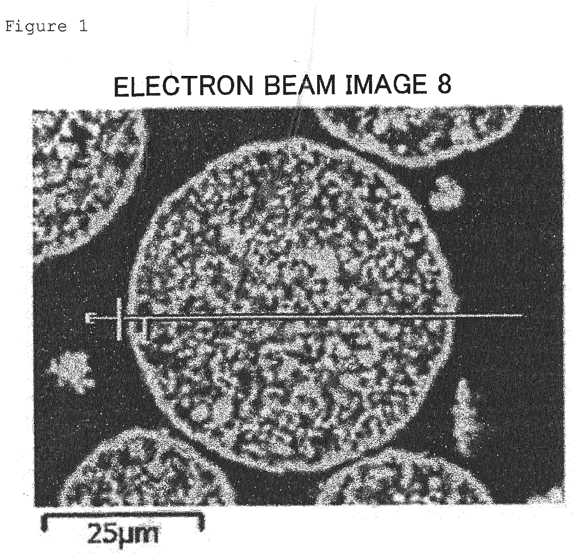

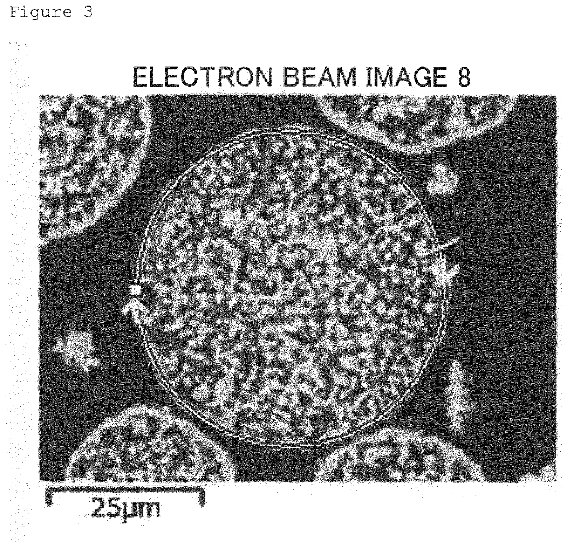

Extermination of the thickness of the outer shell structure that will be described below in detail is carried out by observing the cross-section of a ferrite particle embedded in a resin with an SEM and image-processing the image obtained as shown in Figures 1 and 3.

### <Determination of thickness of outer shell structure>

The thickness of the outer shell structure of particles is examined by the following procedures.

A specimen for observing the cross section (for examining the thickness of the outer shell structure) is prepared by polishing the cross section of the molded ferrite particles embedded with a resin with a polishing machine and subjecting to gold vapor deposition. The SEM image of the specimen is photographed with JSM-6060A manufactured by JEOL Ltd., at an accelerating voltage of 5 kV, in a visual field at a 200-times of magnification. The image data to be analyzed is introduced into an image analyzing software (Image-Pro PLUS) manufactured by Media Cybernetics Inc., through an interface. More specifically, after adjusting the contrast of the image obtained, the brightness of the image is extracted for each particle by the line profile function of the analyzing software. In the procedure, a straight line passing through the approximate center of a particle in the horizontal direction is drawn. Among the peaks present in the profile, the peak corresponding to the outer shell portion is put between two markers, and the width is assumed to be the thickness of the outer shell structure. Note that the peak is defined as the two minimum values putting the maximum value between in the line profile. Further, the contrast is preferable to be adjusted to make a brightness of the embedding resin portion (corresponding to background) 50% or less against to the maximum brightness. The same procedures are carried out for 30 particles in the same manner, and the average is assumed to be the thickness of the outer shell structure.

The proportion of the outer shell structure in the circumferential length of the outer periphery can be determined by observing the cross-section of a ferrite particle embedded in a resin with an SEM as shown in Figures 1 and 3, and image-processing the image obtained as described below in detail.

### <Determination of proportion of outer shell structure in the circumferential length of the outer periphery>

The image is adjusted in the same manner as described above, and a line profile of circular or free-form curve (closed curve) is set for the outer shell structure of each particle. In the procedure, the maximum brightness of the profile is represented by Iₘₐₓ, the minimum brightness is represented by Iₘᵢₙ, and the difference between the maximum brightness and the minimum brightness is represented by I_{Δ}, and the range from Iₘᵢₙ or more and less than Iₘᵢₙ+I_{Δ}×0.2 is determined as a portion having no outer shell structure, and the range from Iₘᵢₙ+I_{Δ}×0.2 or more to Iₘₐₓ or less is determined as the portion with an outer shell structure. It means that the proportion of the outer periphery having a thickness in a certain range can be obtained by integrating the line profile lengths having a brightness of Iₘᵢₙ+I_{Δ}×0.2 or more to Iₘₐₓ or less and divided by the line profile length (circumferential length) among the brightness data of the line profile length (circumferential length) obtained by the line profile function. The same procedures are carried out for 30 particles, and the average is assumed to be the proportion of outer shell structure in the circumferential length of the outer periphery (=density of the outer periphery).

### (Determination of proportion of porous portion in internal part of particle)

The image is adjusted in the same manner as described above, and a straight line profile is set to pass through the approximate center of each particle. In the procedure, the maximum brightness of the profile is represented by Iₘₐₓ, the minimum brightness is represented by Iₘᵢₙ, and the difference between the maximum brightness and the minimum brightness is represented by I_{Δ}, and the range from Iₘᵢₙ or more to less than Iₘᵢₙ+I_{Δ}×0.2 is determined as a portion without ferrite, and the range from Iₘᵢₙ+I_{Δ}×0.2 or more to Iₘₐₓ or less is determined as the ferrite portion. It means that the proportion of the ferrite portion in the internal part of the ferrite particle can be obtained by the integrating the line profile lengths having a brightness of Iₘᵢₙ+I_{Δ}×0.2 or more to Iₘₐₓ or less and divided by the line profile length (straight line) among the brightness data of the line profile length (straight line) obtained by the ling profile function. The same procedures are carried out for 30 particles, and the average is assumed to be the density of the internal part of the particle.

In the conventional ferrite particles, low apparent density has been achieved by making the ferrite particles porous. The making of the ferrite particles porous can be easily achieved by changing firing conditions in final firing. However, typical pores in the porous material are uniformly formed in the whole region from the surface to the internal part. As a result, if the properties should be controlled by resin coating or resin impregnation, a large amount of resin presents on the surface of particles, and the matter makes the control of properties extremely difficult due to the large effect of the resin used in the coating and/or the impregnation.

In contrast, the density of the ferrite particles between the portion having an outer shell structure (outer shell portion) and the internal part of the ferrite particle having a porous structure are different even the appearance of the ferrite particles according to the present invention is similar to that of conventional granular particles. Specific characteristics of the ferrite particles are, a large pore volume due to the low density of the internal part of the particle and a large pore diameter due to the high density of the outer shell portion. In addition, apparent density of the ferrite particle is lower than that of a conventional porous core due to an outer shell structure. In addition, as the outside of a ferrite particle is connected to the internal part through localized pores, the internal part of the ferrite particle can be impregnated with a suspension including dispersed resin or functional nanoparticles, with the surface of ferrite particle being exposed even though having a low apparent density. As a result, properties the conventional ferrite particles never achieved can be achieved because the outer shell portion and the internal porous portion can have individual functions.

The ferrite particles according to the present invention contain 0.5 to 4 wt% of Mg and 3 to 20 wt% of Mn.

The ferrite particles according to the present invention contain 47 to 70 wt% of Fe.

The ferrite particles according to the present invention contain 0.5 to 4.5 wt% of Ti.

Containing of Mg in the ferrite particles according to the present invention makes controlling of the magnetization easy. If Mg content is less than 0.5 wt%, the effect of addition is weak, and the magnetization cannot be sufficiently controlled. If Mg content exceeds 4 wt%, the magnetization decreases, and applications based on magnetic properties is made difficult.

Containing of Mn in the ferrite particles according to the present invention makes control of the magnetization and the resistivity easy. If Mn content is less than 3 wt%, the effect of addition is weak, and the magnetization cannot be sufficiently controlled. If Mn content exceeds 20 wt%, content of Mn may approach to the stoichiometry of Mn ferrite, and the effect of containing decreases, i.e. containing of Mn may be meaningless. If Mn is contained, the magnetization may be controlled by firing temperature under a specific oxygen concentration.

Containing of both elements Mn and Mg is preferable from the viewpoint of precise control of firing temperature. In other words, the magnetization of the ferrite particles is roughly controlled by the content of Mg, and the relation between firing temperature and magnetization is further controlled in more detail by the content of Mn.

In the usage of the carrier for electrophotographic developer, a developer composed of a ferrite carrier used the ferrite particles and full-color toners with good charging start can be obtained if the ferrite particles contain Mg. In addition, the resistivity can be increased. If Mg content is less than 0.5 wt%, sufficient effect of the containing of Mg is not achieved and the resistivity decreases, and the image quality is made poor with generation of fogging, poor tone reproduction. In addition, if the carrier is used for electrophotographic developer, the strings of a magnetic brush is hardened to cause the generation of image defects such as brush streak marks due to excessively high magnetization. If Mg content exceeds 4 wt%, not only the ferrite carrier scattering occurs due to lowered magnetization, but also the amount of moisture adsorbed increases due to the effect of hydroxyl group originating from Mg if the firing temperature is low, and make the environmental dependency of electrical properties such as the charge amount and the resistivity poor.

If Fe content in the ferrite particles according to the present invention is less than 47 wt%, no outer shell structure is formed. If Fe content exceeds 70 wt%, no effect of containing Mg is achieved, i.e. the ferrite particles might be the magnetite.

The ferrite particles according to the present invention is preferable to contain 0.5 to 4.5 wt% of Ti. Ti has an effect to make the firing temperature low, and achieves not only reduced aggregated particles, but also uniform and wrinkled surface properties. If Ti content in the ferrite particles is less than 0.5 wt%, no effect of containing Ti is achieved, and no particle having an outer shell structure is manufactured. If Ti content exceeds 4.5 wt%, it is not preferable because using in applications based on magnetic properties of the ferrite particles is made difficult even the ferrite particles have outer shell structure are manufactured.

The difference between Ti content in the ferrite particles according to the present invention and the Ti content in the ferrite particles without outer shell structure, i.e., the difference in Ti content between the vicinity of the surface of particle and the internal part of particle, is preferable to be 0.5 to 4.5 wt%.

If difference in Ti content is less than 0.5 wt%, no outer shell structure is formed due to the small coating amount of composite oxide particles. If difference is more than 4.5 wt%, it is not preferable because the magnetization tends to decrease, and using in applications based on magnetic properties is made difficult.

The Ti oxides contained in an outer shell structure can be confirmed by EDX elemental mapping analysis on the cross-sectional sample for SEM. The Ti oxides include not only TiO₂ but also solid-dissolved compounds of one or more elements constituting the matrix of ferrite particle such as Fe-Ti oxides, Mg-Ti oxides, Sr-Ti oxides, Mn-Ti oxides, Mg-Fe-Ti oxides, Mg-Mn-Ti oxides, Sr-Fe-Ti oxides, Sr-Mn-Ti oxides, Sr-Mg-Ti oxides, Fe-Mn-Ti oxides, Fe-Mn-Mg-Ti oxides, Sr-Mn-Mg-Ti oxides, Sr-Fe-Mg-Ti oxides, and Sr-Fe-Mn-Ti oxides.

The ferrite particles according to the present invention contain 0 to 1.5 wt% of Sr. Containing of Sr not only contributes to adjusting the resistivity and the surface properties, with an effect of maintaining high magnetization, but also influences on enhancing the charging ability of the ferrite particles. The effect is particularly large in the presence of Ti. If Sr content is more than 1.5 wt%, the residual magnetization and the coercive force increase, and using in applications based on soft magnetic properties of the ferrite particles is made difficult.

### <Determination of content of Fe, Mg, Ti and Sr>

The contents of Fe, Mg, Ti and Sr are determined as follows.

Ferrite particles (ferrite carrier core material) in an amount of 0.2 g are weighed and completely dissolved in 60 ml of pure water with addition of 20 ml of 1 N hydrochloric acid and 20 ml of 1 N nitric acid with heating. The content of Fe, Mg, Ti and Sr in the aqueous solution thus prepared are determined by using an ICP analyzer (ICPS-1000IV manufactured by Shimadzu Corporation).

The ferrite particle according to the present invention is preferable to have a magnetization of 55 to 85 Am²/kg in an applied magnetic field of 5K·1000/4π·A/m, in the VSM examination. If the magnetization of the ferrite particles is less than 55 Am²/kg at 5K·1000/4π·A/m, using in applications based on the magnetic properties of the ferrite particles cannot achieve its performance. The magnetization of the ferrite particles exceeding 85 Am²/kg at 5K·1000/4π·A/m is not the composition according to the present invention.

### <Determination of the magnetic properties>

The magnetic properties are determined with a vibrating sample magnetometer (model: VSM-C7-10A (manufactured by Toei Industry Co., Ltd.)). A cell with an inner diameter of 5 mm and a height of 2 mm is filled with the sample particles (the ferrite particles) to be examined and set in the apparatus. In the examination, sweeping is carried out under applied magnetic field up to 5K·1000/4π·A/m. Then, the applied magnetic field is reduced to draw the hysteresis curve on a recording paper. Based on the hysteresis curve, the magnetization under applied magnetic field up to 5K·1000/4π·A/m is determined. The residual magnetization and the coercive force are determined in the same manner.

The volume average particle diameter of the ferrite particles according to the present invention examined with a laser diffraction particle size distribution examiner is preferable to be 10 to 100 µm, more preferable to be 15 to 50 µm, most preferable to be 20 to 50 µm. If the volume average particle diameter of the ferrite particles is less than 10 µm, the portion with a low density in the internal part of a ferrite particle decreases relatively, and particles having a sufficiently low apparent density may not be manufactured. The diameter is preferable to be 100 µm or less from the viewpoint of reducing voids in densely filling a specified volume with the ferrite particles even the ferrite particles having an outer shell structure can be formed in the ferrite particles with a volume average particle diameter of more than 100 µm.

### <Determination of the volume average particle diameter>

The volume average particle diameter is examined by the laser diffraction/scattering method. A micro track particle size analyzer (Model 9320-X100) manufactured by Nikkiso Co., Ltd is used as the apparatus. The refractive index is assumed to be 2.42, and the examination is carried out under the environment temperature of 25±5°C and relative humidity of 55±15%. The volume average particle diameter (median diameter) in this specification refers to the cumulative 50% particle diameter below the sieve in the volume distribution mode. Water is used as a dispersion medium.

BET specific surface area of the ferrite particles according to the present invention is preferable to be 0.2 to 1 m²/g, more preferable to be 0.2 to 0.85 m²/g.

If BET specific surface area is less than the range, it is not preferable because particles having the densely filled internal part are formed without sufficient formation of an outer shell structure. If BET specific surface area exceeds the range, the porous ferrite particles without formation of the outer shell structure is manufactured. Note that in examining of the BET specific surface area, the examination results may be influenced by the moisture on the surface of the sample ferrite particles. So, pre-treatment for removing the moisture put on the surface of the sample particles as much as possible is preferable.

### <Determination of BET specific surface area>

The BET specific surface area is examined with BET specific surface area analyzer (Macsorb HM model 1208 (manufactured by Mountech Co.)). Sample particles in an amount of about 5 to 7 g is placed in the standard sample cell for the exclusive use in the specific surface area analyzer to be accurately weighed with an analytical balance, and the sample particles (the ferrite particles) are set in an examination port for initiation of the examination. The examination carried out by the one-point method automatically calculate the BET specific surface area by inputting the weight of the sample particles. Note that the sample particles in an amount of about 20 g are separately taken onto a medicine wrapping paper and degassed to -0.1 MPa with a vacuum dryer as a pre-treatment before examination. After reaching the degree of vacuum to -0.1 MPa or less, the sample particles are heated at 200°C for 2 hours.

Environment: temperature at 10 to 30°C, relative humidity at 20 to 80%, without condensation.

The ferrite particles according to the present invention is preferable to have the electric resistivity of 5×10⁷ to 1×10¹¹ Ω at an applied voltage of 50 V for a 6.5-mm gap.

If the electric resistivity of the ferrite particles is less than 5×10⁷ Ω at an applied voltage of 50 V for a 6.5-mm gap, the ferrite composition is close to magnetite or that the outer shell structure is insufficiently formed due to an insufficient Ti content. If the electric resistivity of the ferrite particles exceeds 1×10¹¹ Ω, excessive Ti content on the surface of a ferrite particle may decrease the magnetization.

### <Determination of the electric resistivity>

The electric resistivity is determined as follows.

Non-magnetic plate electrodes (10 mm by 40 mm) are arranged in parallel with a gap of 6.5 mm, and the gap is filled with 200 mg of sample particles (the ferrite particles) weighed. A magnet (surface magnetic flux density of 1500 Gauss and magnet area in contact with electrode of 10 mm by 30 mm) is attached to the plate electrodes to hold the sample particles between the electrodes. Voltages of 50 V, 100 V, 250 V, 500 V and 1000 V are applied to examine the resistivity at each of the applied voltages with an insulation resistivity meter (SM-8210 manufactured by DKK-TOA Corporation).

The ferrite particles are preferable to have the pore volume of 0.06 to 0.2 ml/g (60 to 200 µl/g) and the peak pore diameter of 0.7 to 2 µm.

The ferrite particles with the pore volume of of less than 0.06 ml/g (60 µl/g) is not low in the apparent density because the internal part of the particles have the small pores. If the pore volume of the ferrite particles exceeds 0.2 ml/g (200 µl/g), the apparent density is excessively low, and problems may arise in applications based on magnetic properties of the ferrite particles due to the reduction in magnetic force of a particle as the magnetic particles.

The ferrite particles having the peak pore diameter of more than 2 µm is the particle low in apparent density, and sufficient properties cannot be achieved in applications utilizing the portion having a low density in the internal part of the ferrite particles. If the peak pore diameter of the ferrite particles is less than 0.7 µm, the ferrite particles are most likely in a porous state without outer shell structure, and using in applications based on separate functions between the internal and external parts of a ferrite particle may be made difficult.

If the pore volume and a peak pore diameter are in the ranges, moderately lightweight ferrite particles without the problems described above can be manufactured.

### <Determination of the pore diameter and pore volume of the ferrite particles >

The pore diameter and the pore volume of the ferrite particles are determined as follows. Mercury porosimeters Pascal 140 and Pascal 240 (manufactured by Thermo Fisher Scientific Inc.) are used in the determination. CD3P (for powder use) is used as dilatometer, the sample particles put in the commercially available gelatinous capsule having a plurality of open holes is placed in the dilatometer. The first run includes the degassing with Pascal 140, followed by filling with mercury, to carry out the examination at a low-pressure region (0 to 400 kPa). The second run repeats degassing to carry out the examination at the low-pressure region (0 to 400 kPa). After finishing the second run, the total weight of the dilatometer, mercury, the capsule and the sample is examined. Then, the examination in a high-pressure region (0.1 MPa to 200 MPa) is carried out with Pascal 240. Based on the amount of mercury impregnated in the examination at the high-pressure region, the pore volume, the pore diameter distribution, and the peak pore diameter of the ferrite particles are determined. Note that, the surface tension of mercury was assumed to be 480 dyn/cm and the contact angle was assumed to be 141.3° in the calculation for determination of the pore diameter.

### <Method of manufacturing the ferrite particles according to the present invention>

The method of manufacturing the ferrite particles according to the present invention is described below.

The method for manufacturing the ferrite particles according to the present invention is carried out as follows, for example.

### (Preparation of particles for ferrite core material)

The compounds of Fe, Mn and Mg, and the compounds of Sr, Ti according to needs are pulverized, mixed, calcined, and then pulverized with a rod mill, to prepare calcined ferrite particles.

A preferred composition of the calcined ferrite particles contains 45 to 68 wt% of Fe, 0.5 to 4 wt% of Mg, 3 to 22 wt% of Mn, 0.25 to 6 wt% of Ti, and 0 to 2 wt% of Sr, for example.

If the calcined ferrite powder satisfies the composition range described above, various properties necessary and sufficient for the ferrite particles can be obtained corresponding to applications after coating with Ti compounds followed by firing.

The calcined ferrite powder described above is added water, and a dispersant and a binder according to needs to finish a slurry. After viscosity adjustment of the slurry, granulation is carried out using a spray dryer. The particles are subjected to de-binder to prepare uncoated ferrite particles. The de-binder is carried out at 600 to 1000°C.

The particle diameter D₅₀ of the slurry is preferable to be 0.5 to 4.5 µm. If the slurry particle diameter is in the range, the ferrite particles having a desired BET specific surface area can be manufactured. If the particle diameter D₅₀ of the slurry is less than 0.5 µm, the specific surface area of the calcined ferrite powder after pulverization is too big, and the ferrite particles having a desired BET specific surface area cannot be manufactured because the firing for coating the ferrite particles with TiO₂ particles proceeds excessively. If the slurry particle diameter D₃₀ exceeds 4.5 µm, desired ferrite particles may not be manufactured due to insufficient formation of the outer shell structure even the ferrite particles coated with TiO₂ particles are fired.

The slurry particle diameter in the range described above may be achieved by controlling the pulverization time in preparation of the slurry for the granulation, selecting the pulverization medium to prepare the intended slurry particle diameter and particle size distribution, or classifying the raw material particles in the slurry by using a wet cyclone. If the wet cyclone is used, the solid content in the slurry is different after classification, and the adjustment of the solid content is required. However, as the intended slurry diameter can be achieved in a short time, the wet cyclone may be used in combination with the controlled pulverization time.

The volume average particle diameter of TiO₂ particles for coating is preferable to be 0.05 to 3 µm. If the diameter is less than 0.05 µm, the ferrite particles including the part without outer shell structure may be manufactured because the TiO₂ particles for coating tend to aggregate when the fine particles are adhered on the surface of the uncoated ferrite particles, and the coating layer tends to be irregular even if the surface of the uncoated ferrite particles is coated with the desired amount of the TiO₂ particles. If the diameter exceeds 3 µm, the ferrite particles may include a part without outer shell structure because uniform adhesion on the uncoated ferrite particles is hardly achieved.

The content of the TiO₂ particles for coating is preferable to be 0.8 to 7 wt% against to the uncoated ferrite particles although it depends on the volume average particle diameter. If the content is less than 0.8 wt%, a sufficient resistivity cannot be achieved after final firing. If the content exceeds 7 wt%, the content may cause problems in applications based on magnetic properties of the ferrite particles because TiO₂ particles for coating of ferrite particles adhered on the uncoated ferrite particles may aggregate each other to make the ferrite particles low in magnetization.

### (Preparation of the ferrite particles)

TiO₂ particles for coating are added to the uncoated ferrite particles prepared, and mixed with a mixing mill to prepare raw material for the ferrite particles. The raw materials for the ferrite particles are subjected to final firing at 850 to 1230°C under an inert atmosphere or a weak oxidizing atmosphere such as nitrogen atmosphere or a mixed gas atmosphere of nitrogen and oxygen with the oxygen concentration of 3 vol% or less.

The fired product is pulverized and classified to finish the ferrite particles. The conventional classification method such as wind classification, mesh filtration and sedimentation are used, and the particle size is adjusted to the desired particle diameter. If the dry collection is applied, the collection can be carried out by using a cyclone.

The ferrite particles according to the present invention having each of the properties are thus manufactured.

To make the the TiO₂ particles for coating easy to disperse and adhere on the surface of the ferrite particles according to the present invention, a surface treatment for electrification may be carried out. The surface treatment for electrification reduces the aggregation of TiO₂ particles for coating, and adhesion of TiO₂ particles for coating tends to be achieved before final firing. If the surface treatment agent having a reverse polarity to the charging polarity of the uncoated ferrite particles, effect of preventing the detachment of TiO₂ particles for coating adhered on the uncoated ferrite particles before final firing can be achieved.

The method of adhering the TiO₂ particles for coating on the surface of the uncoated ferrite particles before final firing to be subjected to final firing is proposed as described above. If the TiO₂ particles for coating without subjecting to the pre-treatment for electrification in the dry method should be adhered to the surface of an uncoated ferrite particle before final firing, the properties of the ferrite particles obtained after final firing may be poor because the TiO₂ particles for coating to be adhered may severely aggregate to make the adhesion to the uncoated ferrite particles difficult or the composition may have large deviation due to the adhesion of large aggregates.

As the wet method of coating the surface of the uncoated ferrite particles with the TiO₂ particles for coating before final firing requires removal of the solvent for each of the raw materials of the surface-coated ferrite particles, the large-scale process is expensive. As the dry method of coating the uncoated ferrite particles with the TiO₂ particles for coating just requires the surface treatment of the TiO₂ particles for coating, the processing is easy and cost increase is small.

### <Resin molded product according to the present invention>

The resin molded product according to the present invention is manufactured by heat-curing a molded resin formed from a mixture of the ferrite particles and a resin. The molded resin product contains 50 to 99.5 wt% of the ferrite particles. If the content of the ferrite particles is less than 50 wt%, the properties of ferrite cannot be sufficiently exhibited even the ferrite particles are contained. If the content of the ferrite particles exceeds 99.5 wt%, molding may be impossible because a little resin is contained.

Examples of the resin for use in the resin compound include an epoxy resin, a phenol resin, a melamine resin, a urea resin, and fluorine-contained resin, though not specifically limited. The resin compound contains a curing agent, a curing accelerator, and contains various additives such as silica particles according to needs.

The present invention will be more specifically described with reference to Examples as follows.

### <Example 1>

### <Preparation of the ferrite particles>

Weighed raw materials, 100 mol of Fe₂O₃, 10 mol of MgCO₃, 13.3 mol of Mn₃O₄ and 1 mol of SrCO₃ and 1.35 wt% of carbon black added against to the raw materials as reducing agent were prepared and mixed, pulverized, and then pelletized with a roller compactor. The pellets prepared were calcined in the rotary calcination furnace at 980°C under a nitrogen atmosphere with the oxygen concentration of 0 vol%. The calcined powder or the ferrite core material was finished by pulverizing the calcined product with the rod mill.

The calcined powder for the ferrite core material was pulverized for 1 hour with a wet bead mill. Then, PVA (10% aqueous solution) was added as a binder component in the amount of 1 wt% against to the slurry solid content, and the polycarboxylic acid-based dispersant was added to adjust the slurry viscosity 2 to 3 poise. The slurry particle diameter D₅₀ was 3.259 µm.

The particles for the ferrite core material were prepared by pulverizing the slurry prepared and granulated and dried with a spray dryer, and subjected to a de-binder treatment at 850°C with a rotary kiln under a nitrogen atmosphere with the oxygen concentration of 0 vol%.

4 wt% of the TiO₂ particles for coating was added to the particles for a ferrite core material, mixed and stirred for 10 minutes with a mixing mill. The aggregate in the mixture prepared was loosened with an 80-mesh vibrating sieve to finish the raw materials for the ferrite particles.

The raw material for the ferrite particles prepared was maintained at 1010°C for 4 hours under the nitrogen atmosphere with the oxygen concentration of 0 vol% in an electric furnace for final firing. The fired material was then de-agglomerated and classified to finish the ferrite particles.

### <Example 2>

The ferrite particles were prepared in the same manner as in Example 1, except that weighed ferrite raw material were 100 mol of Fe₂O₃, 5 mol of MgCO₃, 26.6 mol of Mn₃O₄, and 0 mol of SrCO₃.

### <Example 3>

The ferrite particles were prepared in the same manner as in Example 1, except that weighed raw materials of the ferrite were 100 mol of Fe₂O₃, 20 mol of MgCO₃, 6.65 mol of Mn₃O₄, and 0 mol of SrCO₃.

### <Example 4>

The ferrite particles were prepared in the same manner as in Example 1, except that weighed raw materials of the ferrite were 100 mol of Fe₂O₃, 5 mol of MgCO₃, 5 mol of Mn₃O₄, and 0 mol of SrCO₃.

### <Example 5>

The ferrite particles were prepared in the same manner as in Example 1, except that weighed raw materials of the ferrite were n 100 mol of Fe₂O₃, 20 mol of MgCO₃, 26.6 mol of Mn₃O₄, and 0 mol of SrCO₃.

### <Example 6>

The ferrite particles were prepared in the same manner as in Example 1, except that SrCO₃ was 0 mol and 2.5 wt% of TiO₂ particles for coating was added against to the particles for a ferrite core material.

### <Example 7>

The ferrite particles were obtained in the same manner as in Example 1, except that SrCO₃ was 0 mol and 5 wt% of TiO₂ particles for coating was added against to the particles for a ferrite core material.

### <Example 8>

The ferrite particles were prepared in the same manner as in Example 6, except that the final firing temperature was set at 950°C.

### <Example 9>

The ferrite particles were prepared in the same manner as in Example 6, except that the final firing temperature was set at 1050°C.

### <Comparative Example 1>

The ferrite particles were prepared in the same manner as in Example 1, except that the amount of SrCO₃ was 0 mol and the final firing temperature was set at 920°C.

### <Comparative Example 2>

The ferrite particles were prepared in the same manner as in Example 1, except that the amount of SrCO₃ was 0 mol and no TiO₂ particle for coating was added to the particles for a ferrite core material.

### <Comparative Example 3>

The ferrite particles were prepared in the same manner as in Example 1, except that the amount of SrCO₃ was 0 mol and the final firing temperature was set at 1165°C.

Table 1 shows the blending ratio of the ferrite particles used (molar ratio of raw material charged), the amount of carbon black, the calcination conditions (calcination temperature and calcination atmosphere), the final granulation conditions (slurry particle diameter and amount of PVA added), the de-binder conditions (treatment temperature and treatment atmosphere), the mixing conditions of TiO₂ (amount added and mixing conditions) and the final firing conditions (final firing temperature and final firing atmosphere) in Examples 1 to 9 and Comparative Examples 1 to 3. Table 2 shows the composition, the magnetic properties (magnetization, residual magnetization and coercive force) and the shape (cross-sectional shape, proportion of the portion of outer shell structure in the circumferential length of the outer periphery, and the thickness of the outer shell structure) of the ferrite particles prepared. Table 3 shows the powder properties (BET specific surface area, average particle diameter, apparent density, true density, pore volume and peak pore diameter) and the bridge resistance of 6.5 mm-gap (50 V, 100 V, 250 V, 500 V and 1000 V) of the ferrite particles in Examples 1 to 9 and Comparative Examples 1 to 3. Examination methods are as described above.

**[Table 1]**

| | Molar ratio of raw materials charged (mol) | | | | | Amount of carbon black *1 (wt%) | Calcination condition | | Final granulation condition | | De-binder condition | | TiO₂ mixing condition | | Final firing condition | |
|---|---|---|---|---|---|---|---|---|---|---|---|---|---|---|---|---|
| | Fe₂O₃ | MgCO₃ | Mn₃O₄ | TiO₂ | SrCO₃ | | Temperature (°C) | Atmosphere (vol%) | Slurry particle diameter (D₅₀) (µm) | Amount of PVA added (10 wt% aqueous solution) | Temper ature (°C) | Atmosphere (vol%) | Amount added (wt%)*2 | Time (min) | Firing temperature (°C) | Atmosphere (Vol%) |
| Example 1 | 100 | 10 | 13.3 | 0 | 1 | 1.35 | 980 | 0 | 3.259 | 1 | 850 | 0 | 4 | 10 | 1010 | 0 |
| Example 2 | 100 | 5 | 26.6 | 0 | 0 | 1.35 | 980 | 0 | 3.245 | 1 | 850 | 0 | 4 | 10 | 1010 | 0 |
| Example 3 | 100 | 20 | 6.65 | 0 | 0 | 1.35 | 980 | 0 | 3.268 | 1 | 850 | 0 | 4 | 10 | 1010 | 0 |
| Example 4 | 100 | 5 | 5 | 0 | 0 | 1.35 | 980 | 0 | 3.229 | 1 | 850 | 0 | 4 | 10 | 1010 | 0 |
| Example 5 | 100 | 20 | 26.6 | 0 | 0 | 1.35 | 980 | 0 | 3.242 | 1 | 850 | 0 | 4 | 10 | 1010 | 0 |
| Example 6 | 100 | 10 | 13.3 | 0 | 0 | 1.35 | 980 | 0 | 3.231 | 1 | 850 | 0 | 2.5 | 10 | 1010 | 0 |
| Example 7 | 100 | 10 | 13.3 | 0 | 0 | 1.35 | 980 | 0 | 3.269 | 1 | 850 | 0 | 5 | 10 | 1010 | 0 |
| Example 8 | 100 | 10 | 13.3 | 0 | 0 | 1.35 | 980 | 0 | 3.24 | 1 | 850 | 0 | 2.5 | 10 | 950 | 0 |
| Example 9 | 100 | 10 | 13.3 | 0 | 0 | 1.35 | 980 | 0 | 3.274 | 1 | 850 | 0 | 2.5 | 10 | 1050 | 0 |
| Comparative Example 1 | 100 | 10 | 13.3 | 0 | 0 | 1.35 | 980 | 0 | 3.247 | 1 | 850 | 0 | 4 | 10 | 920 | 0 |
| Comparative Example 2 | 100 | 10 | 13.3 | 0 | 0 | 1.35 | 980 | 0 | 3.236 | 1 | 850 | 0 | 0 | 10 | 1010 | 0 |
| Comparative Example 3 | 100 | 10 | 13.3 | 0 | 0 | 1.35 | 980 | 0 | 3.228 | 1 | 850 | 0 | 4 | 10 | 1165 | 0 |

| | | | | | | | | | | | | | | | | |
|---|---|---|---|---|---|---|---|---|---|---|---|---|---|---|---|---|
| *1: Proportion based on the weight of raw material mixture *2: Weight against to particles for ferrite core material | | | | | | | | | | | | | | | | |

**[Table 2]**

| | Composition of ferrite particle (ICP) (wt%) | | | | | Magnetic properties up to 5K·1000/4π·A/m (VSM) | | | Shape of ferrite particles | | | |
|---|---|---|---|---|---|---|---|---|---|---|---|---|
| | Fe | Mg | Mn | Ti | Sr | Magnetization (Am²/kg) | Residual magnetization (Am²/kg) | Coercive force (A/m) | Cross-sectional shape (SEM) | Proportion of portion having outer shell structure in circumferential length (%) | Thickness of the outer shell structure (µm) | Proportion of ferrite portion in internal part of particle (%) |
| Example 1 | 56.36 | 1.23 | 11.06 | 1.95 | 0.59 | 72.66 | 3.27 | 35.97 | Core-shell form | 92 | 2.42 | 61 |
| Example 2 | 49.51 | 0.54 | 19.43 | 1.95 | 0.00 | 74.30 | 3.34 | 37.39 | Core-shell form | 90 | 1.87 | 55 |
| Example 3 | 60.41 | 2.63 | 5.43 | 1.95 | 0.00 | 67.63 | 3.04 | 33.29 | Core-shell form | 95 | 2.65 | 54 |
| Example 4 | 64.24 | 0.70 | 4.74 | 1.95 | 0.00 | 77.70 | 3.5 | 38.45 | Core-shell form | 96 | 2.53 | 58 |
| Example 5 | 48.01 | 2.09 | 11.84 | 1.95 | 0.00 | 66.64 | 3 | 32.78 | Core-shell form | 85 | 2.16 | 52 |
| Example 6 | 57.66 | 1.25 | 11.31 | 1.24 | 0.00 | 76.28 | 3.43 | 38.61 | Core-shell form | 96 | 2.33 | 65 |
| Example 7 | 56.50 | 1.23 | 11.09 | 2.42 | 0.00 | 71.08 | 3.2 | 35.83 | Core-shell form | 98 | 3.65 | 49 |
| Example 8 | 57.66 | 1.25 | 11.31 | 1.24 | 0.00 | 73.18 | 3.81 | 42.5 | Core-shell form | 95 | 2.4 | 73 |
| Example 9 | 57.66 | 1.25 | 11.31 | 1.24 | 0.00 | 77.66 | 3.05 | 29.3 | Core-shell form | 94 | 2.59 | 45 |
| Comparative Example 1 | 56.96 | 1.24 | 11.18 | 1.95 | 0.00 | 68.38 | 4.23 | 46.22 | Porous | Examination impossible* | Examination impossible* | 73 |
| Example 2 | 58.87 | 1.28 | 11.55 | 0.00 | 0.00 | Comparative 81.70 | 3.68 | 40.3 | Porous | Examination impossible* | Examination impossible* | 65 |
| Comparative Example 3 | 56.96 | 1.24 | 11.18 | 1.95 | 0.00 | 78.56 | 2.98 | 32.31 | Granular | Examination impossible* | Examination impossible* | 96 |

| | | | | | | | | | | | | |
|---|---|---|---|---|---|---|---|---|---|---|---|---|
| * Without outer shell structure. | | | | | | | | | | | | |

**[Table 3]**

| | Properties of ferrite particles | | | | | | Resistivity (6.5-mm Gap) (Ω) | | | | |
|---|---|---|---|---|---|---|---|---|---|---|---|
| | BET specific surface area (m²/g) | Average particle diameter (µm) | Apparent density (g/cm³) | True density (g/cm³) | Pore volume (µl/g) | Peak pore diameter (µm) | 50 V | 100 V | 250 V | 500 V | 1000 V |
| Example 1 | 0.3413 | 29.66 | 1.23 | 4.69 | 131.220 | 0.992 | 2.9×10⁹ | 1.3×10⁹ | 5.4×10⁸ | 2.4×10⁷ | Examination impossible |
| Example 2 | 0.3653 | 29.54 | 1.42 | 4.66 | 137.330 | 0.948 | 8.5×10⁸ | 7.0×10⁸ | 9.5×10⁷ | 6.5×10⁶ | Examination impossible |
| Example 3 | 0.3005 | 29.32 | 1.16 | 4.72 | 120.490 | 1.080 | 3.4×10⁹ | 1.8×10⁹ | 6.4×10⁸ | 3.6×10⁷ | Examination impossible |
| Example 4 | 0.392 | 29.60 | 1.35 | 4.78 | 143.980 | 0.904 | 7.8×10⁹ | 4.3×10⁸ | 2.2×10⁶ | Examination impossible | Examination impossible |
| Example 5 | 0.2926 | 29.29 | 1.51 | 4.63 | 118.360 | 1.100 | 5.6×10⁹ | 3.8×10⁹ | 8.7×10³ | 6.2×10⁷ | Examination impossible |
| Example 6 | 0.3823 | 29.74 | 1.21 | 4.73 | 141.580 | 0.919 | 5.8×10⁷ | 3.8×10⁷ | 2.7×10⁶ | Examination impossible | Examination impossible |
| Example 7 | 0.3374 | 29.45 | 1.18 | 4.70 | 130.210 | 1.000 | 1.5×10¹⁰ | 8.5×10⁹ | 7.5×10⁷ | Examination impossible | Examination impossible |
| Example 8 | 0.4724 | 29.58 | 1.01 | 4.73 | 163.150 | 0.798 | 9.0×10⁷ | 6.4×10⁷ | 2.0×10⁶ | Examination impossible | Examination impossible |
| Example 9 | 0.2569 | 29.71 | 1.62 | 4.73 | 108.480 | 1.200 | 3.5×10⁹ | 2.1×10⁹ | 7.2×10⁸ | 1.4×10⁷ | Examination impossible |
| Comparative Example 1 | 0.5766 | 29.42 | 0.97 | 4.86 | 86.460 | 0.498 | 3.8×10⁷ | 6.9×10⁶ | Examination impossible | Examination impossible | Examination impossible |
| Comparative Example 2 | 0.4373 | 29.42 | 1.09 | 4.91 | 74.920 | 0.840 | 1.3×10⁷ | 7.5×10⁶ | 1.6×10⁶ | Examination impossible | Examination impossible |
| Comparative Example 3 | 0.0857 | 29.33 | 2.16 | 4.86 | 10.990 | 0.718 | 6.2×10⁸ | 3.5×10⁸ | 8.5×10⁷ | 2.5×10⁷ | 7.6×10⁶ |

As shown in Table 2, any of the ferrite particles prepared in Examples 1 to 9 has the outer shell structure.

In contrast, the ferrite particles in Comparative Example 1 have no outer shell structure even a porous structure was formed because low firing temperature was loaded on the ferrite particles.

The ferrite particles in Comparative Example 2 have no outer shell structure because high firing temperature was loaded on the ferrite particles.

The ferrite particles in Comparative Example 3 have no outer shell structure because no TiO₂ particle was added to the particles for a ferrite core material.

### <Example 10>

The resin solution having the solid resin content of 6.5 wt% was prepared by diluting the polyamide-imide resin (HPC-1000 manufactured by Hitachi Chemical Co., Ltd.) with water against to 100 parts by weight of the ferrite particles prepared in Example 1. The resin solution and the ferrite particles were mixed by stirring with a versatile mixer to prepare a mixture. Then, the mixture was baked for 2 hours with a hot air dryer at 180°C to finish impregnation of the resin into the ferrite particles. Then, the aggregated ferrite particles were de-agglomerated to prepare the ferrite particles filled with a resin.

### <Example 11>

After preparing the ferrite particles filled with a resin in the same manner as in Example 10, the resin solution including 1 wt% of a polyamide-imide resin against to 100 wt% of the ferrite particles filled with resin was prepared. The resin solution, the ferrite particles were coated with the resin with a fluidized bed coating device, and the resulted mixture was baked for 2 hours with a hot air dryer set at 180°C, and the ferrite particles filled with a resin were coated with a resin. Then, the aggregated ferrite particles were de-agglomerated to prepare the ferrite particles filled with a resin coated with a resin.

### <Example 12>

The resin solution having a polyamide-imide resin content of 2 wt% against to 100 parts by weight of the ferrite particles prepared in Example 1 was prepared. Using the resin solution, the ferrite particles were coated with a resin with a fluidized bed coating device, and the resin coated mixture was baked for 2 hours with a hot air dryer at 180°C, and the ferrite particles filled with a resin were coated with a resin. Then, the aggregated ferrite particles were de-agglomerated to prepare the ferrite particles coated with a resin.

Table 4 shows the ferrite particles used, the conditions for resin filling (resin for filling, amount of resin filled, device used in filling the resin), curing conditions (temperature and time), coating conditions (resin for coating, amount of resin coated, and device used in coating), and curing conditions in Examples 10 to 12.

**[Table 4]**

| | Core material used | Filling condition | | | Curing conditions | | Coating condition | | | Curing conditions | |
|---|---|---|---|---|---|---|---|---|---|---|---|
| | | Resin for filling | Amount of filled resin | Device for filling resin | Temperature | Time | Coated resin | Amount of coated resin | Coating device | Temperature | Time |
| | | | wt% | | °C | hr | | wt% | | °C | hr |
| Example 10 | Ferrite particle prepared in Example 1 | Polyamide-imide resin | 6.5 | Versatile mixer | 180 | 2 | None | | | | |
| Example 11 | | Polyamide-imide resin | 6.5 | Versatile mixer | 180 | 2 | Polyamide-imide resin | 1 | Fluidized bed coating device | 180 | 2 |
| Example 12 | | None | | | | | Polyamide-imide resin | 2 | Fluidized bed coating device | 180 | 2 |

### <Molded product containing magnetic filler>

### <Example 13>

The ferrite particles in an amount of 90 parts by weight prepared in Example 1 and acrylic silicone resin powder in an amount of 10 parts by weight were mixed. Then, the mixture in an amount of 1.0 g was poured in a cylindrical pressing mold having a diameter of 13 mm to press mold at 15 MPa. The molded material prepared was heat treated at 200°C for 2 hours with a hot air dryer, and the resin was melted and solidified. The thickness of the molded product after the heat treatment was examined.

### <Example 14>

The molded material was prepared in the same manner as in Example 13, except that the ferrite particles were replaced with the ferrite particles prepared in Example 8, and the thickness of the molded product was examined.

### <Example 15>

The molded material was prepared in the same manner as in Example 13, except that the ferrite particles were replaced with the ferrite particles prepared in Example 9, and the thickness of the molded product was examined.

### <Example 16>

The molded material was prepared in the same manner as in Example 13, except that a styrene-acrylic resin was used as a binder resin and the heat treatment temperature was changed to 220°C, and the thickness of the molded product was examined.

### <Example 17>

The molded material was prepared in the same manner as in Example 13, except that a fluorine-contained resin was used as a binder resin and the heat treatment temperature was changed to 165°C, and the thickness of the molded product was examined.

### <Example 18>

A molded material was prepared in the same manner as in Example 17, except that the ferrite particles were replaced with the ferrite particles filled with resin prepared in Example 10, and the thickness of the molded product was examined.

### <Example 19>

A molded material was prepared in the same manner as in Example 17, except that the ferrite particles were replaced with the resin-coated ferrite particles filled with resin prepared in Example 11, and the thickness of the molded product was examined.

### <Example 20>

A molded material was prepared in the same manner as in Example 17, except that the ferrite particles were replaced with the resin-coated ferrite particles prepared in Example 12, and the thickness of the molded product was examined.

### <Comparative Example 4>

A molded material was prepared in the same manner as in Example 13, except that the ferrite particles were replaced with the ferrite particles prepared in Comparative Example 3, and the thickness of the molded product was examined.

Table 5 shows the ferrite particles used (magnetic filler), the binder resin, the mixing weight ratio between magnetic filler and binder resin, the preparation of the test piece (charge weight of mixture and molding pressure), the heat treatment (heat treatment temperature and treatment time), the thickness of molded products and the density of molded product in Examples 13 to 20 and Comparative Example 4.

**[Table 5]**

| | Magnetic filler | Binder resin | Mixing ratio between magnetic filler and binder resin | Preparation of test piece | | Heat treatment | | Thickness of molded product | Density of molded product |
|---|---|---|---|---|---|---|---|---|---|
| | | | | Charge weight of mixture | Molding pressure | Temperature | Time | | |
| | | | | g | Mpa | °C | hr | Mm | g/cm³ |
| Example 13 | Ferrite particle obtained in Example 1 | A | 90:10 | 1 | 15 | 200 | 2 | 2.65 | 2.84 |
| Example 14 | Ferrite particle obtained in Example 8 | | 90:10 | 1 | 15 | 200 | 2 | 2.80 | 2.69 |
| Example 15 | Ferrite particle obtained in Example 9 | | 90:10 | 1 | 15 | 200 | 2 | 2.60 | 2.9 |
| Example 16 | Ferrite particle obtained in Example 1 | B | 90:10 | 1 | 1.5 | 220 | 2 | 2.65 | 2.84 |
| Example 17 | Ferrite particle obtained in Example 1 | C | 90:10 | 1 | 15 | 165 | 2 | 2.55 | 2.96 |
| Example 18 | Ferrite particle filled with resin obtained in Example 10 | | 90:10 | 1 | 15 | 165 | 2 | 2.45 | 3.07 |
| Example 19 | Resin-coated ferrite particle filled with resin obtained in Example 11 | | 90:10 | 1 | 15 | 165 | 2 | 2.40 | 3.14 |
| Example 20 | Resin-coated ferrite particle obtained in Example 12 | | 90:10 | 1 | 15 | 165 | 2 | 2.65 | 2.84 |
| Comparative Example 4 | Ferrite particle obtained in Comparative Example 3 | A | 90:10 | 1 | 15 | 200 | 2 | 1.95 | 3.86 |

| | | | | | | | | | |
|---|---|---|---|---|---|---|---|---|---|
| *) Binder resin A: Acrylic silicone resin B: Styrene-acrylic resin C: Fluorine-containing resin | | | | | | | | | |

As shown in Table 5, it was confirmed that the molded products in Examples 13 to 20 have a large thickness and a low density. On the other hand, the molded product in Comparative Example 4 has a high density due to the dense internal part of the ferrite particles.

### [Industrial Applicability]

The ferrite particles according to the present invention is low in apparent density due to the outer shell structure. So, the ferrite particles fill the specified volume with a small weight while maintaining various properties in a controllable state. As a result, the resin molded product containing the ferrite particles as a magnetic filler is low in density, and is applicable in applications such as radio wave absorb.

## Claims

1. A magnetic filler composed of ferrite particles having an outer shell structure containing a Ti oxide, **characterised in that** the ferrite particles contain 47 to 70 wt% of Fe, 0.5 to 4 wt% of Mg, 3 to 20 wt% of Mn, 0.5 to 4.5 wt% of Ti, and 0 to 1.5 wt% of Sr.

2. The magnetic filler according to claim 1, wherein the thickness of the outer shell structure of the ferrite particles is 0.5 to 10 µm.

3. The magnetic filler according to claim 1 or 2, wherein density of the internal part of the ferrite particle is smaller than the density of the outer shell structure.

4. The magnetic filler according to any one of claims 1 to 3, wherein the volume average particle diameter of the ferrite particles is 10 to 100 µm.

5. The magnetic filler according to any one of claims 1 to 4, wherein the ferrite particles are coated with a resin.

6. The magnetic filler according to any one of claims 1 to 4, wherein the ferrite particles are impregnated with a resin.

7. The magnetic filler according to claim 6, wherein the ferrite particles are coated with a resin.

8. A resin molded product formed from the magnetic filler according to any one of claims 1 to 7.

## Patentansprüche

1. Ein magnetischer Füllstoff, der aus Ferritteilchen mit einer Außenhüllenstruktur, die ein Ti-Oxid enthält, zusammengesetzt ist, **dadurch gekennzeichnet, dass** die Ferritteilchen 47 bis 70 Gew.-% Fe, 0,5 bis 4 Gew.-% Mg, 3 bis 20 Gew.-% Mn, 0,5 bis 4,5 Gew.-% Ti und 0 bis 1,5 Gew.-% Sr enthalten.

2. Der magnetische Füllstoff gemäß Anspruch 1, wobei die Dicke der Außenhüllenstruktur der Ferritteilchen 0,5 bis 10 µm beträgt.

3. Der magnetische Füllstoff gemäß Anspruch 1 oder 2, wobei die Dichte des inneren Teils des Ferritteilchens geringer ist als die Dichte der Außenhüllenstruktur.

4. Der magnetische Füllstoff gemäß einem der Ansprüche 1 bis 3, wobei der volumengemittelte Teilchendurchmesser der Ferritteilchen 10 bis 100 µm beträgt.

5. Der magnetische Füllstoff gemäß einem der Ansprüche 1 bis 4, wobei die Ferritteilchen mit einem Harz beschichtet sind.

6. Der magnetische Füllstoff gemäß einem der Ansprüche 1 bis 4, wobei die Ferritteilchen mit einem Harz imprägniert sind.

7. Der magnetische Füllstoff gemäß Anspruch 6, wobei die Ferritteilchen mit einem Harz beschichtet sind.

8. Ein Harzformgegenstand, der aus dem magnetischen Füllstoff gemäß einem der Ansprüche 1 bis 7 gebildet ist.

## Revendications

1. Charge magnétique composée de particules de ferrite ayant une structure de gaine extérieure contenant un oxyde de Ti, **caractérisée en ce que** les particules de ferrite contiennent 47 à 70 % en poids de Fe, 0,5 à 4 % en poids de Mg, 3 à 20 % en poids de Mn, 0,5 à 4,5 % en poids de Ti, et 0 à 1,5 % en poids de Sr.

2. Charge magnétique selon la revendication 1, dans laquelle l'épaisseur de la structure de gaine extérieure des particules de ferrite est de 0,5 à 10 µm.

3. Charge magnétique selon la revendication 1 ou 2, dans laquelle la densité de la partie interne de la particule de ferrite est inférieure à la densité de la structure de gaine extérieure.

4. Charge magnétique selon l'une quelconque des revendications 1 à 3, dans laquelle la granulométrie moyenne en volume des particules de ferrite est de 10 à 100 µm.

5. Charge magnétique selon l'une quelconque des revendications 1 à 4, dans laquelle les particules de ferrite sont revêtues d'une résine.

6. Charge magnétique selon l'une quelconque des revendications 1 à 4, dans laquelle les particules de ferrite sont imprégnées d'une résine.

7. Charge magnétique selon la revendication 6, dans laquelle les particules de ferrite sont revêtues d'une résine.

8. Produit moulé en résine formé à partir de la charge magnétique selon l'une quelconque des revendications 1 à 7.
